# DEMANDE DE BREVET EUROPEEN

(11) **EP 1 431 855 A2**
(43) Date de publication de la demande: **23.06.2004**
(21) Numéro de dépôt: 03293254.3
(22) Date de dépôt: 19.12.2003
(51) Int. Cl.: G05B 23/02

(54) **Procédé de diagnostic de défauts de fonctionnement d'un ensemble de fonctions**

(30) Priorité: 20.12.2002 FR 0216354
(71) Demandeur: Renault s.a.s., 92100 Boulogne Billancourt (FR)
(72) Inventeur: Boutin, Samuel, 78114 Magny Les Hameaux (FR)
(74) Mandataire: Davies, Owen Robert Treharne

(57) **Abrégé**

L'invention concerne un procédé de diagnostic de défauts de fonctionnement d'une enveloppe de fonctions placées sur un ensemble de systèmes électroniques comportant des composants (Aⁿᵢ; Cⁿᵢ; UCEₙ; B), produisant et consommant des données, au moins une desdites données (xᵢ) étant susceptible de prendre une valeur particulière (xᵢₚ) prédéterminée, consécutivement à l'apparition d'un défaut de fonctionnement de l'un au moins des composants (Aⁿᵢ; Cⁿᵢ; UCEₙ; B) dudit ensemble, ce procédé étant caractérisé en ce qu'il comporte :
- une étape de diagnostic des opérations élémentaires du calculateur et de pilotes ;
- une étape de diagnostic des données, capteurs et actionneurs présents dans ladite enveloppe ;
- pour au moins une enveloppe, une étape de diagnostic de l'enveloppe réalisée à partir du diagnostic des opérations élémentaires du calculateur, des pilotes et du diagnostic des données, capteurs et actionneurs présents dans ladite enveloppe, le diagnostic de l'enveloppe étant déterminé par les valeurs particulières engendrées par l'ensemble des évènements d'entrée de l'enveloppe et par les valeurs particulières propagées par ladite enveloppe via des opérations élémentaires internes.

## Description

La présente invention est relative à un procédé de diagnostic de défauts de fonctionnement d'une enveloppe de fonctions placées sur un ensemble de systèmes électroniques.

L'ensemble peut comporter des composants (Aⁿᵢ; Cⁿᵢ, UCEₙ; B), produisant et consommant des données, au moins une desdites données (xᵢ) étant susceptible de prendre une valeur particulière (xᵢₚ) prédéterminée, consécutivement à l'apparition d'un défaut de fonctionnement de l'un au moins des composants (Aⁿᵢ; Cⁿᵢ; UCEₙ; B) dudit ensemble.

On connaît des ensembles de systèmes électroniques de ce type, conçus notamment pour équiper des véhicules automobiles. Un tel véhicule comprend couramment plusieurs systèmes assurant chacun l'exécution d'une prestation telle que la commande du moteur propulsant le véhicule, la gestion de la climatisation de l'habitacle, la gestion des liaisons du véhicule au sol (freinage, suspension), la gestion de communications téléphoniques.

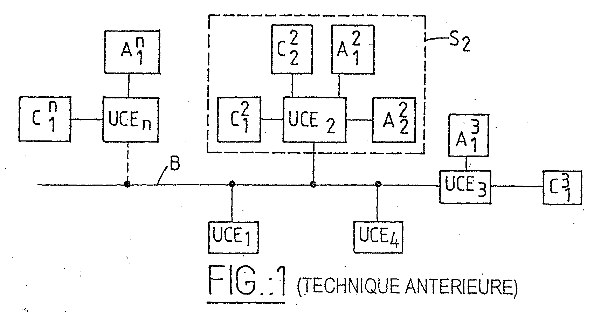

On a schématisé à la figure 1 du dessin annexé les composants matériels de l'ensemble de ces systèmes. Ces composants comprennent essentiellement des unités de commande électroniques ou "calculateurs" UCEₘ, chaque calculateur étant éventuellement connecté à des capteurs Cⁿᵢ et à des actionneurs A^{m}ⱼ, tous les calculateurs étant connectés à au moins un même bus B pour y émettre ou recevoir des informations par exemple multiplexées, en provenance ou à destination des autres calculateurs connectés au bus B.

Ce multiplexage est obtenu notamment, comme cela est bien connu pour le bus CAN par exemple, en introduisant les informations en cause dans des messages matérialisés par des trames de signaux numériques.

A titre d'exemple illustratif, le système S₂ de "commande du moteur" comprend le calculateur UCE₂, plusieurs capteurs C²ᵢ sensibles à des grandeurs telles que le régime du moteur, à combustion interne par exemple, la pression au collecteur d'admission de ce moteur, la pression de l'air extérieur, la température de l'eau de refroidissement du moteur, celle de l'air, l'état de charge de la batterie, et plusieurs actionneurs A²ⱼ.

Le calculateur UCE₂ est dûment programmé pour exécuter plusieurs fonctions de commande du moteur telles que : la régulation de ralenti, la régulation de la richesse du mélange air/carburant, le réglage de l'avance à l'allumage de ce mélange et la re-circulation des gaz d'échappement. Pour ce faire le calculateur UCE₂ exploite des informations venues des capteurs C²ᵢ précités et élabore des signaux de commande des actionneurs A²ⱼ constitués par une vanne de commande d'air additionnel et une bobine d'allumage de bougie pour la fonction "régulation de ralenti", un injecteur de carburant pour la fonction "régulateur de richesse", la même bobine d'allumage pour la fonction "avance de l'allumage" et une vanne pour la fonction "re-circulation de gaz d'échappement".

Les autres "prestations" évoquées ci-dessus, e.g. "climatisation de l'habitacle" et "liaison avec le sol", sont exécutées par des systèmes d'architecture analogue à celle présentée ci-dessus pour la commande du moteur.

On note que les prestations sont réalisées par un ensemble de fonctions, de capteurs et d'actionneurs indépendamment de leur réalisation par un système particulier. Par exemple, la prestation "accès au véhicule" est réalisée notamment par des fonctions de commande des serrures des différentes portes du véhicule, ceci indépendamment du mode de réalisation par des calculateurs et des réseaux entre ces calculateurs.

Tous ces systèmes mis en communication par un même bus B constituent un réseau multiplexé. On conçoit alors que plusieurs fonctions relevant de systèmes différents peuvent exploiter des informations issues de mêmes capteurs, par exemple, ce qui évite de coûteuses redondances dans la structure de l'ensemble des systèmes. L'utilisation d'un réseau multiplexé permet aussi de réduire de manière très importante la longueur des lignes électriques interconnectant les différents éléments de l'ensemble. Un tel ensemble multiplexé permet aussi la mise en place de fonctions non classiques et éventuellement complexes, faisant intervenir parfois plusieurs systèmes et dites pour cette raison "transversales".

A titre d'exemple illustratif et non limitatif, la perception de l'information "sac d'air (ou "airbag") déclenché", significative de ce que le véhicule a subi un choc, peut être traitée alors de manière à commander l'émission d'un appel au secours par un dispositif de téléphonie mobile embarqué dans le véhicule.

On connaît de la demande de brevet français N° 01 15819, la notion de valeur particulière et son utilisation dans un procédé de diagnostic de défauts de fonctionnement d'un ensemble de systèmes électroniques.

Cependant, ce procédé ne permet de diagnostiquer les calculateurs qu'à travers les fonctions qui sont placées sur ces dits calculateurs. Lors d'une analyse de panne, on a donc le détail des diagnostics des composants internes au calculateur et le détail des diagnostics des composants externes au calculateur.

En après-vente, on souhaite traiter uniquement l'analyse des entrées et des sorties des calculateurs, c'est à dire de l'enveloppe des fonctions placées sur un calculateur donné; une enveloppe de fonction étant alors un ensemble de fonctions dont l'interface avec les fonctions hors de ladite enveloppe est composée des interfaces des fonctions à l'intérieur de l'enveloppe avec les fonctions hors de l'enveloppe.

Pour permettre une recherche de panne plus rapide, l'invention vise un procédé de diagnostic de défauts de fonctionnement d'une enveloppe de fonctions placées sur un ensemble de systèmes électroniques comportant des composants (Aⁿᵢ; Cⁿᵢ; UCEₙ; B), produisant et consommant des données, au moins une desdites données (xᵢ) étant susceptible de prendre une valeur particulière (xᵢₚ) prédéterminée, consécutivement à l'apparition d'un défaut de fonctionnement de l'un au moins des composants (Aⁿᵢ; Cⁿᵢ; UCEₙ; B) dudit ensemble, ce procédé étant caractérisé en ce qu'il comporte :
- une étape de diagnostic des opérations élémentaires du calculateur et de pilotes ;
- une étape de diagnostic des données, capteurs et actionneurs présents dans ladite enveloppe ;
- pour au moins une enveloppe, une étape de diagnostic de l'enveloppe réalisée à partir du diagnostic des opérations élémentaires du calculateur, des pilotes et du diagnostic des données, capteurs et actionneurs présents dans ladite enveloppe, le diagnostic de l'enveloppe étant déterminé par les valeurs particulières engendrées par l'ensemble des événements d'entrée de l'enveloppe et par les valeurs particulières propagées par ladite enveloppe via des opérations élémentaires internes et
- une étape d'enregistrement du diagnostic de ladite enveloppe sur un moyen de mémorisation pour un outil prévu pour le diagnostic de ladite enveloppe.

De cette manière, une recherche de panne s'effectue en recherchant d'abord les enveloppes concernées puis en examinant le contenu de chaque enveloppe ce qui permet d'aller plus vite. Il sera comprise que le terme système électronique couvre tous systèmes électronique et électrique produisant et consommant des donnés.

Selon un aspect particulier de l'invention, au moins une enveloppe est l'enveloppe des fonctions placées sur un calculateur.

De cette manière, le service après-vente peut identifier directement les calculateurs susceptibles d'être à l'origine d'un défaut.

Selon un aspect particulier de l'invention, au moins une enveloppe est l'enveloppe des fonctions réalisant une prestation.

De cette manière, si un utilisateur se plaint du mauvais fonctionnement d'une prestation, on identifie plus rapidement la cause du problème.

Au moins une enveloppe est l'enveloppe des fonctions réalisant une prestation sur un calculateur.

Ledit ensemble de systèmes électroniques peut comporter un ensemble de systèmes pour équiper un véhicule. Le procédé peut comprendre une étape de l'établissement d'une sortie indiquant ledit ou lesdits défauts de fonctionnement.

La présente invention fournit aussi un article de commerce comportant une mémoire lisible par un ordinateur, un programme exécutable par un ordinateur étant enregistré sur ladite mémoire pour le diagnostic de défauts de fonctionnement d'une architecture fonctionnelle, caractérisé en ce que ledit programme inclut un codage pour:
- effectuer une étape de diagnostic des opérations élémentaires du calculateur et de pilotes ;
- effectuer une étape de diagnostic des données, capteurs et actionneurs présents dans ladite enveloppe ;
- effectuer, pour au moins une enveloppe, une étape de diagnostic de l'enveloppe réalisé à partir du diagnostic des opérations élémentaires du calculateur, des pilotes et du diagnostic des données, capteurs et actionneurs présents dans ladite enveloppe, le diagnostic de l'enveloppe étant déterminé par les valeurs particulières engendrées par l'ensemble des évènements d'entrée de l'enveloppe et par les valeurs particulières propagées par ladite enveloppe via des opérations élémentaires internes et
- effectuer une étape d'enregistrement du diagnostic de ladite enveloppe sur un moyen de mémorisation pour un outil prévu pour le diagnostic de ladite enveloppe.

La présente invention fournit aussi un outil informatique programmé pour le diagnostic de défauts de fonctionnement d'une enveloppe utilisant des étapes du procédé selon le procédé de l'invention ou programmé en utilisant un article de commerce selon la présente invention.

D'autres buts, caractéristiques et avantages de la présente invention apparaîtront à titre exemplaire à la lecture de la description qui va suivre et à l'examen des dessins annexés dans lesquels :
- la figure 1 est un schéma d'un ensemble de systèmes électroniques qu'on se propose de doter de moyens de diagnostic de défauts de fonctionnement suivant la présente invention, cet ensemble étant décrit dans le préambule de la présente description et
- la figure 2 est un schéma décrivant une architecture fonctionnelle composée de fonctions capteurs et actionneurs
- la figure 3 illustre la notion d'enveloppe fonctionnelle pour un premier ensemble de fonctions en montrant le contenu de l'enveloppe.
- La figure 4 schématise les échanges entre deux enveloppes, dont une est représentée à la figure 3.

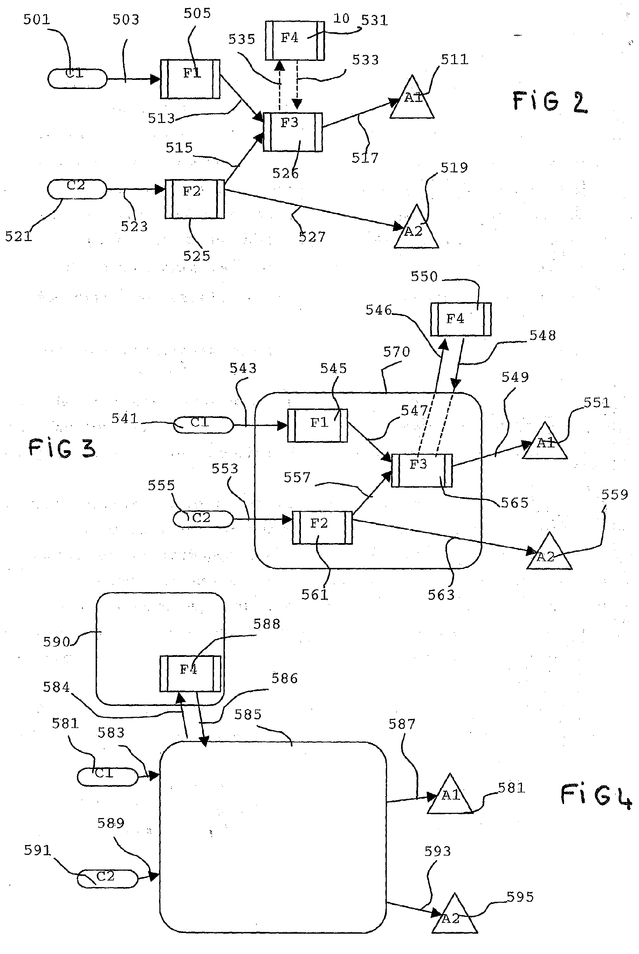

En figure 2, une architecture fonctionnelle est décrite.

Elle est composée des fonctions F1 505, F2 525, F3 526 et F4 531, échangeant entre elles des flots de données 503, 523, 513, 515, 517, 527, 533 et 535 provenant de capteurs C1 501 et C2 521, et transmises à des actionneurs A1 511 et A2 519.

Dans la suite, on dira qu'une valeur particulière diagnostique un flot de données si elle est représentative du fonctionnement normal et d'au moins un défaut de fonctionnement.

Les flots de données sont diagnostiqués par les fonctions et
- une valeur particulière A, du flot de données 503, émise par le capteur C1 501 à destination de la fonction F1 505, diagnostique le fonctionnement de C1 ;
- une valeur particulière B du flot de données 513 émise par la fonction F1 diagnostique le fonctionnement de F1 et notamment la réception du flot de données entre C1 et F1 ainsi que le fonctionnement de C1; c'est à dire que B est notamment émise sur apparition de A ;
- une valeur particulière C du flot de données 533 diagnostique un défaut de F4 ;
- finalement, la fonction F3 émet une valeur particulière D sur réception de la valeur particulière B, à destination de l'actionneur A1 511 et une valeur particulière E sur réception de la valeur particulière C, à destination de la fonction F4 et de l'actionneur A1, à condition que B n'ait pas été détecté.

La valeur particulière à destination de l'actionneur est, typiquement, une commande nulle pour l'actionneur.

Dans un second temps, tel que représenté à la figure 3, l'architecture fonctionnelle décrite précédemment, ainsi que son diagnostic sont en fait inscrits dans une enveloppe 570 qui peut être indifféremment, selon la présente invention, un calculateur ou une prestation.

On note que, si l'on omet ce qui se passe dans l'enveloppe, on peut résumer le diagnostic de l'enveloppe comme suit :
- la valeur particulière A, du flot de données 543, émise par le capteur C1 541 à destination de l'enveloppe 570, diagnostique le fonctionnement de C1,
- Sur émission de A, l'enveloppe 570 émet la valeur particulière D à destination de l'actionneur A1,
- la valeur C à destination de l'enveloppe 570 diagnostic un défaut de fonctionnement externe à l'enveloppe de la fonction F4,
- Sur émission de C et en l'absence de A, l'enveloppe 570 émet une valeur particulière E à destination de F4 et de l'actionneur A1.

On note que le diagnostic de l'enveloppe peut être calculé automatiquement en considérant, pour chaque valeur particulière d'entrée de l'enveloppe, l'ensemble des valeurs particulières propagées affectées à des flots de données sortant de l'enveloppe suite à l'apparition de ladite valeur particulière.

On note que toutes les propagations d'informations de diagnostic internes à l'enveloppe ont disparu dans la description du diagnostic de l'enveloppe 570.

Dans une étape ultérieure, telle que représentée à la figure 4, où la fonction F4 est elle même rattachée à une enveloppe 590, le diagnostic est décrit au niveau des enveloppes, des capteurs et des actionneurs. Le diagnostic de l'enveloppe 570, maintenant appelée 585 dans ce nouveau contexte, est maintenant:
- la valeur particulière A du flot de données 503, émise par le capteur C1 501 à destination de l'enveloppe 570, diagnostique le fonctionnement de C1,
- sur émission de la valeur particulière A, l'enveloppe 570 émet la valeur particulière D à destination de l'actionneur A1,
- la valeur C à destination de l'enveloppe 570 diagnostic un défaut de fonctionnement de l'enveloppe 590,
- Sur émission de C et en l'absence de A, l'enveloppe 570 émet une valeur particulière E à destination de l'enveloppe 590 et de l'actionneur A1.

Lors de l'exploitation des informations de diagnostic, et afin d'accélérer les recherches, on peut exploiter les enveloppes, qu'il s'agisse d'enveloppes de calculateur ou de prestation de panne en déterminant d'abord les enveloppes d'où proviennent potentiellement ladite panne, puis pour chacune de ces enveloppes, en faisant une analyse plus fine.

Ledit ensemble de systèmes électroniques peut comporter un ensemble de systèmes pour équiper un véhicule. Le procédé comprend de préférence une étape de l'établissement d'une sortie indiquant ledit ou lesdits défauts de fonctionnement.

Ce procédé peut être mis en oeuvre à l'aide d'un outil informatique permettant l'édition des différents objets nécessaires à la conception et l'automatisation partielle des différentes étapes du procédé constitué par l'invention.

Le procédé de l'invention peut être programmé sur un article de commerce comportant une mémoire lisible par un ordinateur, par exemple un CD, DVD ou équivalent ou sur le disque dur d'un ordinateur. Un tel programme pour le procédé sera exécutable par un ordinateur, et sera enregistré sur ladite mémoire pour être exécuté par ledit ordinateur.

## Revendications

1. Procédé de diagnostic de défauts de fonctionnement d'une enveloppe de fonctions placées sur un ensemble de systèmes électroniques comportant des composants (Aⁿᵢ; Cⁿᵢ; UCEₙ; B), produisant et consommant des données, au moins une desdites données (xᵢ) étant susceptible de prendre une valeur particulière (xᵢₚ) prédéterminée, consécutivement à l'apparition d'un défaut de fonctionnement de l'un au moins des composants (Aⁿᵢ; Cⁿᵢ; UCEₙ; B) dudit ensemble, ce procédé étant **caractérisé en ce qu'**il comporte :
- une étape de diagnostic des opérations élémentaires du calculateur et de pilotes ;
- une étape de diagnostic des données, capteurs et actionneurs présents dans ladite enveloppe ;
- pour au moins une enveloppe, une étape de diagnostic de l'enveloppe réalisée à partir du diagnostic des opérations élémentaires du calculateur, des pilotes et du diagnostic des données, capteurs et actionneurs présents dans ladite enveloppe, le diagnostic de l'enveloppe étant déterminé par les valeurs particulières engendrées par l'ensemble des évènements d'entrée de l'enveloppe et par les valeurs particulières propagées par ladite enveloppe via des opérations élémentaires internes et
- une étape d'enregistrement du diagnostic de ladite enveloppe sur un moyen de mémorisation pour un outil prévu pour le diagnostic de ladite enveloppe.

2. Procédé selon la revendication 1, **caractérisé en ce qu'**au moins une enveloppe est l'enveloppe des fonctions placées sur un calculateur.

3. Procédé selon l'une quelconque des revendications 1 ou 2, **caractérisé en ce qu'**au moins une enveloppe est l'enveloppe des fonctions réalisant une prestation.

4. Procédé selon l'une quelconque des revendications 1 à 3, **caractérisé en ce qu'**au moins une enveloppe est l'enveloppe des fonctions réalisant une prestation sur un calculateur.

5. Procédé de diagnostic selon l'une quelconque des revendications 1 à 4, **caractérisé en ce que** ledit ensemble de systèmes électroniques comporte un ensemble de systèmes pour équiper un véhicule.

6. Procédé de diagnostic selon l'une quelconque des revendications 1 à 5, **caractérisé en ce qu'**il comprend une étape de l'établissement d'une sortie indiquant ledit ou lesdits défauts de fonctionnement.

7. Un article de commerce comportant une mémoire lisible par un ordinateur, un programme exécutable par un ordinateur étant enregistré sur ladite mémoire pour le diagnostic de défauts de fonctionnement d'une architecture fonctionnelle, **caractérisé en ce que** ledit programme inclut un codage pour:
- effectuer une étape de diagnostic des opérations élémentaires du calculateur et de pilotes ;
- effectuer une étape de diagnostic des données, capteurs et actionneurs présents dans ladite enveloppe ;
- effectuer, pour au moins une enveloppe, une étape de diagnostic de l'enveloppe réalisé à partir du diagnostic des opérations élémentaires du calculateur, des pilotes et du diagnostic des données, capteurs et actionneurs présents dans ladite enveloppe, le diagnostic de l'enveloppe étant déterminé par les valeurs particulières engendrées par l'ensemble des évènements d'entrée de l'enveloppe et par les valeurs particulières propagées par ladite enveloppe via des opérations élémentaires internes et
- effectuer une étape d'enregistrement du diagnostic de ladite enveloppe sur un moyen de mémorisation pour un outil prévu pour le diagnostic de ladite enveloppe.

8. Un outil informatique programmé pour le diagnostic de défauts de fonctionnement d'une enveloppe utilisant des étapes du procédé selon l'une quelconque des revendications 1 à 6 ou programmé en utilisant un article de commerce selon la revendication 7.
